# DEMANDE DE BREVET EUROPEEN

(11) **EP 1 110 754 A1**
(43) Date de publication de la demande: **27.06.2001**
(21) Numéro de dépôt: 00126055.3
(22) Date de dépôt: 29.11.2000
(51) Int. Cl.: B60B 1/04

(54) **Moyeu d'une roue à rayons notamment d'une roue de bicyclette**

(30) Priorité: 23.12.1999 FR 9916692
(71) Demandeur: MAVIC S.A., 01990 Saint-Trivier sur Moignans (FR)
(72) Inventeur: Pont, Hervé, 71680 Vinzelles (FR)
(74) Mandataire: Lejeune, Benoit

(57) **Abrégé**

L'invention concerne un corps de moyeu comprenant deux flasques latéraux (3, 4) ayant des perçages en forme de boutonnière (10) prévus pour l'accrochage des rayons avec une partie de grande section (14) et une partie de petite section (15). Il est caractérisé par le fait que chacun des flasques comprend un fût (6) approximativement axial prolongé par un disque (7) et que la portion de grande section (14) est située au niveau du disque et la portion de petite section (15) au niveau du fût, la portion de petite section se trouvant à la base de la partie de grande section en référence à la direction dans laquelle le rayon exerce une traction sur le flasque lorsqu'il est monté et mis sous tension.

L'invention est également relative à un moyeu ainsi qu'une roue de bicyclette à rayons.

## Description

L'invention concerne le corps de moyeu d'une roue à rayons notamment d'une roue de bicyclette. L'invention concerne également un moyeu comprenant un tel corps de moyeu, ainsi qu'une roue à rayons comprenant le moyeu en question.

De façon connue, une roue de bicyclette comprend une jante, un moyeu, et des rayons de liaison de la jante au moyeu. De plus, usuellement, les rayons sont réglables en tension.

Parmi les rayons couramment utilisés, on connaît les rayons coudés et les rayons droits. De façon usuelle, un moyeu prévu pour des rayons coudés présente deux disques latéraux orientés dans des plans radiaux. Les rayons sont enfilés dans des perçages des disques.

Pour les rayons droits, la tête de rayon est retenue par une portion de surface du flasque qui est orientée parallèlement à l'axe du moyeu.

Pour retenir la tête de rayon, on peut réaliser sur cette portion de surface un perçage fermé. Dans ce cas, le rayon devra être enfilé dans ce perçage selon une direction radiale. Un tel mode de montage des rayons est complexe à réaliser, en effet, à l'enfilage, le rayon interfère avec l'arbre du moyeu. En outre, un tel perçage fermé n'est pas compatible avec un rayon droit à deux têtes.

Une autre solution consiste à retenir la tête de rayon au niveau d'une fente. La fente peut être réalisée dans la paroi du flasque, pour un mode de rayonnage radial, ou au niveau d'un créneau radial pour un mode de rayonnage croisé. Chaque rayon est mis en place dans sa fente avec un minimum de déplacement nécessaire. L'opération de montage des rayons est bien simplifiée.

Du fait que la fente est un perçage ouvert, elle est susceptible de se déformer plus facilement sous l'effet de la tension des rayons. On est alors obligé de renforcer l'épaisseur de la paroi ou ajouter une rondelle ou une bague additionnelle de façon à atteindre un niveau satisfaisant de résistance à l'arrachement. Une telle bague est décrite par exemple dans la demande de brevet publiée sous le numéro EP 764 551.

Une autre solution consiste à réaliser des perçages en forme de boutonnière avec une portion de grande section pour l'engagement de la tête de rayon, et une partie de petite section pour la retenue du rayon.

Un tel perçage se révèle cependant encombrant à cause de la partie de grande section.

La demande de brevet DE 36 12 772 propose une solution qui consiste à réaliser la grande section et la petite section des boutonnières dans deux plans différents, la partie de grande section étant percée dans une paroi radiale du flasque.

Toutefois, la construction qui est proposée n'est pas totalement satisfaisante. En effet, les parties de grande section se trouvent plus proches de l'axe du moyeu que les parties de petite section. De ce fait, elles sont relativement proches les unes des autres, ce qui affaiblit la rigidité du flasque. En second lieu, les parties de petite section qui retiennent les têtes de rayon sont relativement éloignées de l'axe. Il faut donc des flasques relativement épais pour atteindre une rigidité satisfaisante.

Un but de l'invention est de proposer un corps de moyeu et un moyeu améliorés en ce sens qu'ils facilitent les opérations de montage, qu'ils ont des dimensions réduites, et qu'ils sont résistants et légers.

Un autre but de l'invention est de proposer un corps de moyeu qui soit facile à construire.

D'autres buts et avantages de l'invention apparaîtront au cours de la description qui va suivre.

Le corps de moyeu selon l'invention comprend deux flasques latéraux ayant des perçages en forme de boutonnière prévus pour l'accrochage des rayons avec une partie de grande section et une partie de petite section. Il est caractérisé par le fait qu'au moins un des flasques comprend un fût approximativement axial prolongé par un disque, et que la portion de grande section est située au niveau du disque et la portion de petite section au niveau du fût, la portion de petite section se trouvant à la base de la partie de grande section en référence à la direction dans laquelle le rayon exerce une traction sur le flasque lorsqu'il est monté et mis sous tension.

Le moyeu selon l'invention comprend un arbre et corps de moyeu tel qu'il est précédemment défini.

Les perçages ont globalement la forme d'une boutonnière, la tête des rayons étant introduite dans la portion de grande section, et le rayon étant retenu dans la portion de petite section. L'opération de montage est donc simplifiée.

Mais à la différence de la boutonnière décrite dans le DE 36 12 772, la partie de grande section se trouve ici de l'autre côté de la partie de petite section. De ce fait, on dispose d'une surface relativement plus importante pour la loger. En outre, la partie de petite section est ramenée vers l'axe du moyeu, d'où un gain de rigidité et de poids.

L'invention sera mieux comprise en se référant à la description ci-dessous et aux dessins en annexe qui en font partie intégrante.

La figure 1 représente en perspective un corps de moyeu selon un mode non limitatif de mise en oeuvre de l'invention.

La figure 2 représente en vue de face un flasque du corps de moyeu de la figure 1.

La figure 3 est une vue de côté du flasque de la figure 2.

La figure 4 représente l'extrémité d'un rayon droit.

La figure 5 est une vue en perspective du flasque de la figure 2.

La figure 6 est une section du moyeu de la figure 2 au niveau du perçage d'un flasque.

La figure 7 représente en coupe un moyeu complet selon un mode particulier de mise en oeuvre de l'invention.

La figure 8 est une vue de face d'un flasque selon un second mode de mise en oeuvre de l'invention.

La figure 9 est une vue de côté du flasque de la figure 8.

La figure 10 est une vue de dos du flasque de la figure 8.

La figure 11 est une vue en perspective de ce même flasque.

La figure 12 est une vue en section au niveau des deux perçages d'une branche.

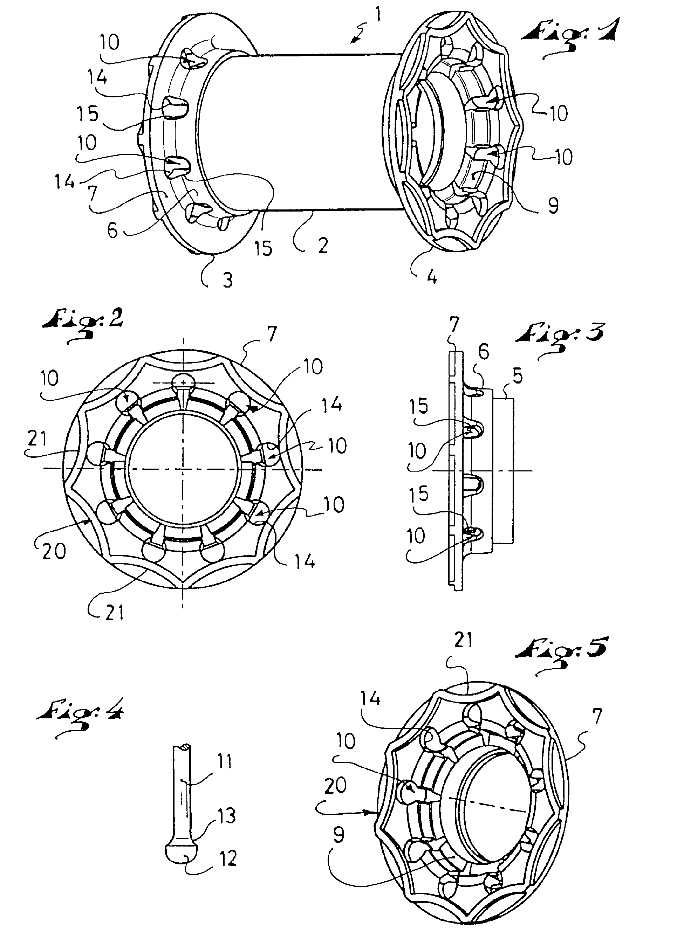

La figure 1 représente un corps de moyeu 1 prévu pour une roue de bicyclette. De façon connue, le corps de moyeu 1 présente une partie centrale 2 creuse et cylindrique de révolution autour de l'axe défini par le moyeu, et deux flasques latéraux 3 et 4.

Le corps de moyeu 1 de la figure 1 est prévu pour réaliser un moyeu complet avec un arbre et des roulements, éventuellement un mécanisme de roue libre dans le cas d'une roue arrière. Différentes constructions sont possibles. Certaines seroht décrites ultérieurement. Dans le mode de réalisation illustré, la partie centrale et les deux flasques sont trois éléments distincts assemblés entre eux. Ceci n'est pas limitatif, et le corps de moyeu pourrait également être réalisé d'une seule pièce.

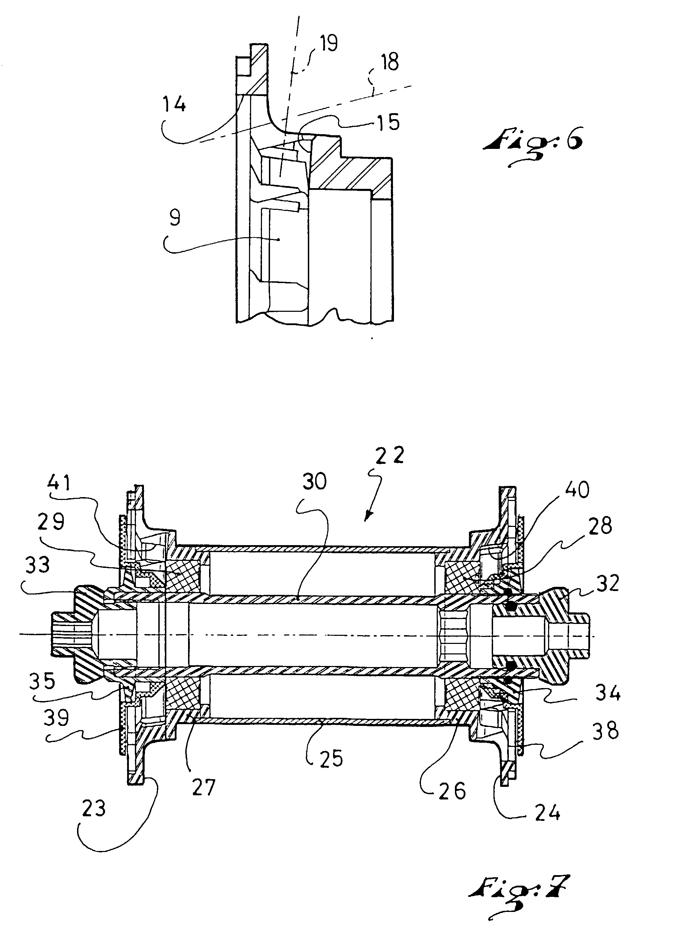

Un flasque du moyeu 1 est représenté dans les figures 2 et 3. Ce flasque présente une portion d'emboîtement 5 prévue pour coopérer avec le tube qui forme la partie centrale 2 du moyeu. Selon le mode de réalisation illustré, la partie d'emboîtement a un diamètre externe égal au diamètre interne du tube central. Eventuellement, cette portion peut être usinée spécialement pour recevoir le tube ou encore pour le montage d'un roulement.

Une portion 6 en fût axial est raccordée à la portion d'emboîtement 5. Le fût 6 est prolongé vers l'extérieur par un disque radial 7, dans le sens d'un éloignement de l'axe du corps de moyeu. La paroi interne du fût définit une cavité 9.

Des perçages 10 sont prévus pour l'accrochage de l'extrémité d'un rayon de type droit. Une telle extrémité de rayon est représentée en figure 4. De façon connue, le corps de rayon 11 est une tige longiligne, qui se termine par une tête élargie 12. Eventuellement, la surface 13 située sous la tête est aménagée avec une forme particulière, notamment une forme arrondie pour coopérer avec les bords des perçages. La tête peut également présenter une section particulière, allongée, carrée ou rectangulaire, notamment, de façon à empêcher la rotation du rayon lors de sa mise sous tension.

Les figures représentent un flasque avec neuf perçages. Ce nombre naturellement n'est pas limitatif, il dépend du nombre de rayons de la roue, et donc du degré de rigidité souhaité pour la roue.

Selon l'invention, chacun des perçage 10 est réalisé en partie dans le fût 6 et en partie dans le disque 7.

Dans le mode de réalisation illustré, chaque perçage 10 est délimité par une grande section 14 située dans le disque, et une petite section 15 située dans le fût, les deux sections communiquant entre elles à la frontière entre le fût et le disque.

La grande section 14 est réalisée selon une découpe circulaire de diamètre supérieur à la largeur de la petite section.

L'ouverture définie par la grande section 14 présente des dimensions supérieures aux dimensions hors tout d'une section de la tête 12 de rayon, pour que la tête de rayon puisse traverser la grande section. De préférence, ces dimensions sont légèrement supérieures, et elles sont suffisantes pour introduire la tête de rayon avec le corps incliné selon une direction proche d'une direction axiale repérée par le trait mixte 18 dans la figure 6. En admettant que la grande section ait un périmètre circulaire, la direction d'engagement 18 passe sensiblement par son centre, et elle est orientée de façon approximativement perpendiculaire au disque.

La petite section 15 se présente comme une fente dont la largeur est voisine du diamètre du corps 11 du rayon à proximité de la tête. La profondeur de la fente est voisine du diamètre du corps de rayon, pour que le corps de rayon puisse être positionné dans la petite section, selon une direction approximativement parallèle au plan défini par le disque sans interférer avec le disque.

La direction de retenue du rayon est proche d'une direction radiale. Elle est repérée par le trait mixte 19 dans la figure 6. Dans cette position, la portion du corps de rayon 11 située sous la tête du rayon est engagée dans l'ouverture définie par la petite section. Les bords de cette petite section retiennent la tête de rayon par sa surface 13 située sous la tête, sur une partie de sa périphérie. La tête du rayon se trouve logée dans la cavité 9 définie par la paroi interne du fût.

L'opération de mise en place du rayon se fait de la façon suivante.

A l'engagement, le rayon est présenté selon la direction schématisée en 18, la tête en regard d'une portion de grande section. Par rapport au plan défini par le disque, le rayon se trouve du côté du plan médian du moyeu. Ensuite, le rayon est déplacé selon la direction qu'il définit, jusqu'à ce que la tête ait traversé le perçage, puis le rayon est redressé selon la direction 19, il est alors introduit dans la partie de petite section. Dans cette position, la tête de rayon s'est rapprochée à la fois de l'axe du moyeu et du plan médian du moyeu. En outre, la direction 19 de service est franchement différente de la direction 18 d'engagement. Dans ces conditions, on comprend qu'il ne serait pas possible de ressortir la tête de rayon par la grande section 14 en maintenant le rayon orienté parallèlement à la direction 19. Le corps du rayon se trouve en effet retenu par le disque. Ainsi, lorsque la roue est en service, le rayon ne peut pas se décrocher du flasque, même à l'occasion d'une diminution accidentelle de sa tension.

On remarquera que dans ce mode de réalisation, la partie de petite section est située à la base de la partie de grande section en référence à la direction dans laquelle le rayon exerce une traction sur le flasque, c'est-à-dire qu'elle est plus proche de l'axe du moyeu que la partie de grande section. En outre, l'engagement de l'extrémité d'un rayon dans le flasque se fait en présentant l'extrémité en question du côté intérieur du disque, c'est-à-dire le côté orienté vers le plan médian du moyeu.

Sur le plan des contraintes, comme les portions de grandes sections sont portées par le disque qui est orienté de façon radiale et de façon approximativement parallèle à la direction de traction des rayons, les parties de grandes sections contribuent efficacement à renforcer les portions de petite section, ce qui améliore la résistance à l'arrachement. De plus, les portions de grande section sont situées sur l'extérieur par rapport aux portions de petite section. De ce fait, elles sont situées sur une circonférence plus grande que les portions de petite section. Bien que leur découpe présente des dimensions plus importantes, il reste entre deux grandes sections successives suffisamment de matière du flasque pour avoir une rigidité satisfaisante, ce qui n'aurait pas été le cas si les portions de grande section avaient été réalisées plus proches de l'axe par rapport aux parties de petite section.

Pour améliorer encore la résistance à l'arrachement des perçages, l'invention prévoit de renforcer localement le disque 7 par une poutre 20 en saillie. En se reportant aux figures 2 et 5, la poutre 20 s'étend de façon continue dans une zone du disque comprise entre les perçages 10 et le rebord périphérique. Dans le mode de réalisation illustré, la poutre comprend une série d'ondulations 21 dont le point bas, c'est-à-dire le point le plus proche de l'axe du moyeu se trouve vers chaque perçage 10, et le point haut, c'est-à-dire le plus éloigné de l'axe du moyeu, se trouve à égale distance de deux perçages adjacents.

La poutre est de préférence réalisée d'une seule pièce avec le reste du flasque. Elle contribue à une meilleure répartition dans le disque des contraintes résultant de la tension des rayons.

La figure 7 représente à titre d'illustration de l'invention un moyeu avant 22 comprenant deux flasques 23 et 24 semblables à celui qui a été décrit précédemment. Les flasques sont reliés par une entretoise centrale tubulaire 25 dont les extrémités sont emboîtées sur les portions d'emboîtement 26 et 27 des flasques.

Eventuellement, les flasques et l'entretoise sont collés entre eux, ou assemblés par tout autre moyen approprié.

Des roulements 28 et 29 sont logés dans les portions d'emboîtement des flasques à l'opposé de l'entretoise 25. Un arbre 30 est monté à l'intérieur des roulements 28 et 29. L'arbre présente aux extrémités deux embouts 32 et 33 qui sont prévus pour offrir un appui aux branches de la fourche, et pour être traversés par un axe de blocage rapide. Le réglage du jeu de fonctionnement de l'ensemble selon une direction axiale est réalisé de façon traditionnelle par exemple par des coupelles d'extrémité 34 et 35 vissées sur l'arbre.

De préférence, des rondelles 38 et 39 sont intercalées entre les coupelles 34, 35 et les roulements. Ces rondelles ont un diamètre externe qui est légèrement inférieur au diamètre externe du disque du flasque. Elles obturent les cavités 40 et 41 des fûts, et elles sont situées à une distance du disque correspondant approximativement à l'épaisseur d'une tête de rayon. En fait, les rondelles sont élastiquement déformables, et leur distance par rapport au disque est prévue pour qu'à l'engagement d'un rayon, la tête de rayon vienne forcer légèrement contre la rondelle au moment de son changement d'orientation. Ainsi, il y a un point dur à franchir au moment où le rayon est redressé de sa direction d'engagement vers sa direction de service. Quoi qu'il arrive, la rondelle empêche le rayon de reprendre sa direction d'engagement, la direction 18 de la figure 6, si bien que le rayon ne risque pas de se décrocher de lui-même au cours des opérations de montage.

Lorsque la roue est montée, les rondelles masquent la cavité des flasques et les têtes de rayons.

Le mode de construction du moyeu qui vient d'être décrit n'est pas limitatif, et d'autres constructions pourraient aussi convenir. Notamment, au lieu de prendre appui contre les flasques, l'entretoise tubulaire pourrait être emboîtée sur l'intérieur des potions d'emboîtement, et prendre appui directement sur les cages extérieures des roulements. L'entretoise et les flasques pourraient aussi être réalisés d'un seul tenant. D'autres constructions sont encore possibles.

Pour le moyeu qui vient d'être décrit, les flasques peuvent être réalisés par moulage, notamment moulage sous pression, par exemple en alliage d'aluminium, de magnésium ou tout autre alliage approprié. Ils pourraient également être usinés dans la masse.

Les flasques peuvent également être réalisés en tôle avec une mise en forme par des frappes successives. Pour un tel flasque réalisé en tôle, il est possible de remplacer les ondulations de la poutre par une simple nervure de renfort située à la périphérie externe du disque.

L'entretoise centrale est quant à elle réalisée par exemple en alliage d'aluminium, ou tout autre matériau approprié.

Les flasques qui ont été décrits jusqu'ici sont appropriés pour des rayons droits à une ou deux têtes, rayonnés selon un mode de rayonnage radial.

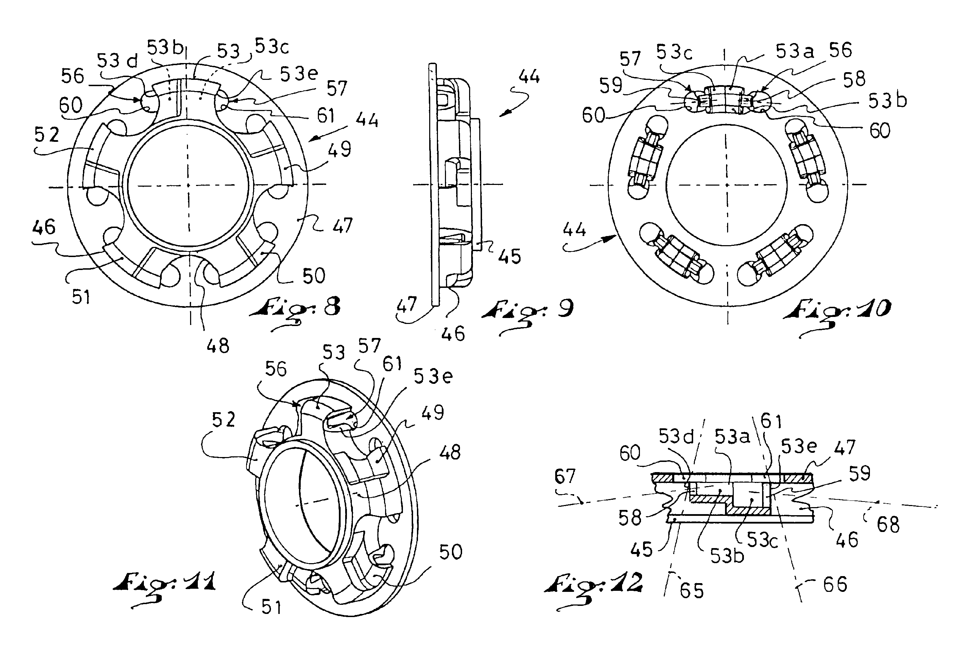

Les figures 8 et suivantes représentent un flasque 44 convenant pour un mode de rayonnage croisé des rayons. Plus précisément, ce flasque est prévu pour un montage dit tangent où les rayons sont montés deux à deux tête-bêche selon une direction tangente à l'entretoise centrale du corps de moyeu. Ce flasque peut être associé avec un flasque de même nature, dans le cas où les deux nappes de rayons de la roue sont du type croisé, ou bien avec un flasque comme celui qui a été décrit précédemment pour une nappe de rayons radiaux.

Le flasque 44 présente comme le précédent une portion d'emboîtement 45, un fût 46 et un disque extérieur 47.

Comme dans le cas précédent, la portion d'emboîtement a pour fonction d'assurer la liaison avec l'entretoise centrale dans le cas où le moyeu est construit en plusieurs éléments assemblés entre eux. Cette portion est cependant facultative.

Le fût 46 présente une forme sensiblement plus complexe que dans le cas précédent, ceci est dû à la direction des rayons qui est différente. Le fût a une partie principale 48 cylindrique de révolution autour de l'axe du moyeu, et plusieurs branches radiales 49, 50, 51, 52, 53 correspondant au départ de deux rayons. Le nombre de branches n'est pas limitatif. Les branches 49 à 53 s'étendent le long du disque en direction de sa périphérie et sont réparties de façon régulière.

Pour simplifier la description, seule l'une des branches, en l'occurrence la branche 53, va être décrite en détail. Chaque branche est creuse, c'est-à-dire qu'elle définit une cavité 53a ouverte vers l'extérieur du flasque. La cavité est divisée en deux parties 53b, 53c, de profondeur différente selon une direction parallèle à l'axe du moyeu et juxtaposées le long d'un plan radial. La cavité de plus petite profondeur est suffisamment grande pour accueillir la tête d'un rayon, et la cavité de plus grande profondeur est également prévue pour accueillir une branche de rayon mais de façon décalée en direction du plan médian du moyeu, afin de permettre le croisement des rayons provenant de deux branches adjacentes.

Chacune des branches présente par ailleurs deux parois latérales 53d et 53e. Les parois latérales ont une orientation approximativement radiale, et elles sont en vis-à-vis pour deux branches adjacentes. Du fait de la profondeur différente des deux parties 53b et 53c, les parois latérales 53d et 53e ont une hauteur différente mesurée selon une direction axiale. Une paroi latérale de grande hauteur se trouve en vis-à-vis d'une paroi latérale de petite hauteur de la branche adjacente.

Chacune des branches a deux perçages 56 et 57 en forme de boutonnière, avec une grande section d'engagement de la tête de rayon et une petite section de retenue du rayon.

La partie de petite section 58, 59 de chaque perçage est découpée dans une paroi latérale 53d, 53e d'une branche. La partie de grande section 60, 61 est découpée dans le disque au pied de la partie de petite section et communique avec une partie de petite section.

Contrairement au cas précédent, les parties de grande et de petite section sont centrées ici quasiment à une même distance de l'axe du moyeu. Néanmoins pour un même perçage, la partie de petite section est située à la base de la partie de grande section en référence à la direction dans laquelle le rayon exerce une traction sur le flasque.

Comme dans le cas précédent, une partie de grande section présente une découpe suffisamment large pour que la tête d'un rayon puisse la traverser selon une direction proche d'une direction perpendiculaire au disque 47. Ces directions sont schématisées en 65 et 66 dans la figure 12 pour les perçages 56 et 57. Les parties de petites sections sont quant à elles des fentes de largeur sensiblement égale au diamètre du corps de rayon à proximité de la tête. Les rayons sont orientés sensiblement perpendiculairement aux parois latérales des branches. Ces directions sont schématisées en 67 et 68 dans la figure 12. Les fentes présentent une longueur différente, en relation avec la hauteur différente des parois et la profondeur différente des cavités, pour permettre le croisement de chacun des rayons partant d'une branche avec un rayon provenant d'une branche adjacente.

Le mode de retenue du rayon est semblable à ce qui a été décrit avec le mode de réalisation précédent. En position de service, le disque empêche le rayon de s'éloigner du centre du moyeu et donc de se décrocher accidentellement.

Comme dans le cas précédent, on pourrait prévoir en plus une poutre de renforcement du disque, ainsi qu'une rondelle d'obturation des cavités du fût.

En variante, il serait également possible de prévoir une branche avec un seul perçage pour chacun des rayons.

D'autres variantes sont encore possibles.

Les modes de réalisation qui ont été décrits sont adaptés à tout type de rayons, notamment des rayons en alliage d'aluminium ou autre, ou bien des rayons en acier inoxydable.

On comprend aisément que les dimensions de la grande section sont déterminées en fonction des dimensions de la tête de rayon, et les dimensions de la petite section sont déterminées en fonction des dimensions du corps de rayon. La détermination de ces dimensions est à la portée de l'homme du métier.

Pour le corps de rayon, il est possible d'utiliser un corps ovalisé, de façon à avoir un effet anti-rotation par coopération du corps avec la partie de petite section des perçages.

Naturellement, la présente description n'est donnée qu'à titre indicatif, et l'on pourrait adopter d'autres mises en oeuvre de l'invention sans pour autant sortir du cadre de celle-ci.

Notamment, un moyeu pourrait comprendre deux flasques de diamètre différent.

## Revendications

1. Corps de moyeu comprenant deux flasques latéraux (3, 4, 23, 24, 44) ayant des perçages en forme de boutonnière (10, 56, 57) prévus pour l'accrochage des rayons avec une partie de grande section (14, 60, 61) et une partie de petite section (15, 56, 57), caractérisé par le fait que chacun des flasques comprend un fût (6, 40, 41, 46) approximativement axial prolongé par un disque (7, 23, 24, 57) et que la portion de grande section (14, 60, 61) est située au niveau du disque et la portion de petite section (15, 56, 57) au niveau du fût, la portion de petite section se trouvant à la base de la partie de grande section en référence à la direction dans laquelle le rayon exerce une traction sur le flasque lorsqu'il est monté et mis sous tension.

2. Corps de moyeu selon la revendication 1, caractérisé par le fait que pour un perçage (10), la partie de petite section (15) est plus proche de l'axe du moyeu que la partie de grande section (14).

3. Corps selon la revendication 1, caractérisé par le fait que le disque (7) est renforcé par une poutre (20) ou une nervure en saillie.

4. Corps de moyeu selon la revendication 1, caractérisé par le fait que le fût (46) présente une partie principale et des branches radiales (49, 50, 51, 52, 53), chacune des branches définissant une cavité (57) débouchant sur l'extérieur du flasque et ayant deux parois latérales (53d, 53e), chaque perçage ayant une partie de petite section (58, 59) située au niveau de la paroi latérale (53d, 53e) et une partie de grande section (60, 61) située dans le disque (47).

5. Corps de moyeu selon la revendication 4, caractérisé par le fait qu'il comprend deux perçages (56, 57) par branche, dont les petites sections sont percées dans chacune des parois latérales (53d, 53e).

6. Corps de moyeu selon l'une quelconque des revendications précédentes, caractérisé par le fait qu'il comprend au moins une rondelle (38 39) prévue pour obturer au moins partiellement la cavité ou les cavités (9, 53a) du fût.

7. Corps de moyeu selon la revendication 1, caractérisé par le fait qu'il comprend deux flasques (3, 4) semblables.

8. Corps de moyeu selon la revendication 1, caractérisé par le fait qu'il comprend deux flasques (3, 44) de nature différente.

9. Corps de moyeu selon l'une quelconque des revendications précédentes, caractérisé par le fait que les deux flasques ont une portion d'emboîtement (5, 45) et qu'ils sont reliés entre eux par une entretoise centrale (2).

10. Moyeu prévu pour une roue de bicyclette à rayons comprenant un arbre et un corps de moyeu monté sur l'arbre, tel qu'il est défini dans l'une quelconque des revendications précédentes.

11. Roue de bicyclette à rayons, comprenant un moyeu, une jante et des rayons de liaison entre le moyeu et la jante, caractérisé par le fait que le moyeu présente un corps de moyeu tel que défini dans l'une quelconque des revendications 1 à 9.
